# EUROPEAN PATENT APPLICATION

(11) **EP 3 308 840 A1**
(43) Date of publication of application: **18.04.2018**
(21) Application number: 16806984.7
(22) Date of filing: 08.06.2016
(51) Int. Cl.: A63F 13/285, A63F 13/23

(54) **VIBRATION FEEDBACK SYSTEM AND VIBRATION FEEDBACK METHOD**

(30) Priority: 11.06.2015 CN 201510320902
(71) Applicant: Shogun Bros. Co. Limited, Hong Kong (CN)
(72) Inventor: HUI, Kai Yin, Hong Kong (CN)
(74) Representative: 2K Patentanwälte Blasberg Kewitz & Reichel
(86) International application number: PCT/IB2016/053352
(87) International publication number: WO 2016/199032

(57) **Abstract**

In order to improve the user experience, the present invention discloses a system and a method for feeding signals output by a terminal back to different devices. A vibration feedback system comprises a signal input device connected with a terminal, a first controller arranged in the signal input device, a signal separator connected with the signal input device, a handle module connected with the signal separator, a second controller electrically connected with the handle module, and a vibrator arranged in the signal input device and electrically connected with the first controller, wherein after a signal is input to the terminal through the signal input device, a vibration signal sent out by the terminal is transmitted to the first controller and the second controller after passing through the signal separator, and the handle module and the vibrator are made to vibrate under the control of the first controller and the second controller. According to the system, under the condition that the original function of a mouse is not changed, the mouse can obtain various forms of vibration feedback from a game in progress, and the pleasure during game playing is increased.

## Description

### BACKGROUND OF THE INVENTION

### Technical Field

The present invention relates to signal processing systems and methods, in particular to a system and method for feeding signal output by a terminal back to different devices so as to improve the user experience.

### Description of Related Art

For computer game players, it is of great importance to improve the user experience of game playing. For example, a user can use a mouse with a vibration function, signals in games are sent to the mouse so as to make the mouse vibrate, and the vividness of games is improved.

For example, a vibrating mouse is disclosed by the Chinese patent application CN200910000635.0. It illustrates that the vibrating mouse comprises a USB chip and a positional distance sensor connected with the USB chip, and the positional distance sensor comprises an optical module used for sensing the position of the mouse. The vibrating mouse is characterized by further comprising one or more vibrating motors connected to the USB chip of the mouse respectively, and the USB chip is connected to an HID chip of a host computer through a USB interface. In the process of operating the mouse, corresponding sound, light and force electric signals are output from the HID chip of the host computer and input to the USB chip through the USB interface, and a driving module in the USB chip controls the vibrating motors. The vibrating mouse is simple and practical in structure, reasonable and ingenious and can obviously create a vibrating experience which cannot be achieved by an ordinary mouse in certain software operating processes (games, music playing, digital analog simulation and the like) for users. Vibration and force feedback experience can be provided for the users. Although the vibrating mouse can improve user experience to a certain extent, it cannot arouse the interest of senior players.

For this reason, it is necessary to design a more advanced user experience system to solve the problem of a simple vibrating experience and improve the vividness during game playing for users.

### BRIEF SUMMARY OF THE INVENTION

In order to solve the above technical problems, the present invention aims to provide a vibration feedback system and a vibration feedback method so that a user can experience dual vibration when playing games, the vividness is improved in the process of playing games, and the user experience is improved.

For realizing the above aim, the following technical scheme is adopted by the present invention:

A vibration feedback system is characterized by comprising:
a signal input device connected with a terminal;
a first controller arranged in the signal input device so as to control the signal input device;
a signal separator connected with the signal input device;
a handle module connected with the signal separator;
a second controller electrically connected with the handle module so as to control the handle module; and
a vibrator arranged in the signal input device and electrically connected with the first controller, wherein after a signal is input into the terminal through the signal input device, a vibration signal sent out by the terminal is transmitted to the first controller and the second controller after passing through the signal separator, and the handle module and the vibrator are made to vibrate under the control of the first controller and the second controller.

According to one embodiment of the vibration feedback system of the present invention, the signal input device is a mouse.

According to one embodiment of the vibration feedback system of the present invention, the vibrator is a vibrating motor arranged in the mouse.

According to one embodiment of the vibration feedback system of the present invention, the signal separator is a hub.

According to one embodiment of the vibration feedback system of the present invention, the terminal includes a personal computer or a smart phone or a tablet computer.

A vibration feedback method is characterized by comprising the following steps of:
users connecting the terminal with the signal separator, and connecting the signal input device and a handle module with the signal separator;
users inputting a signal to the terminal through the signal input device;
the terminal receiving and processing the signal, and then sending a vibration signal to the signal separator;
the signal separator receiving the vibration signal and transmitting it to the signal input device and the handle module; and
the signal input device and the handle module vibrating under the control of the controllers after the vibration signal is received.

According to one embodiment of the vibration feedback method of the present invention, the signal separator is a hub.

According to one embodiment of the vibration feedback method of the present invention, the signal input device is a mouse.

According to the vibration feedback system of the present invention, the signal separator is ingeniously added and can distribute the signal sent out by the terminal, and the unified signal is distributed to the mouse and the handle module; when a vibrating signal is sent out in a game, the mouse and the handle module can receive the signal at the same time and vibrate correspondingly, and thus a user can truly feel the vividness of the game. Similarly, by adoption of the vibration feedback method, users can fully feel the vividness of a virtual world and have the true feeling of being actually on the scene.

The system and method of the present invention are high in usability and suitable for application and popularization.

### BRIEF DESCRIPTION OF THE SEVERAL VIEWS OF THE DRAWINGS

For a better illustration of the specific structure of the system and the specific steps of the method of the present invention, a detailed description of the present invention is given with accompanying drawings, wherein:
FIG. 1 is a structure diagram of one embodiment of a vibration feedback system of the present invention; and

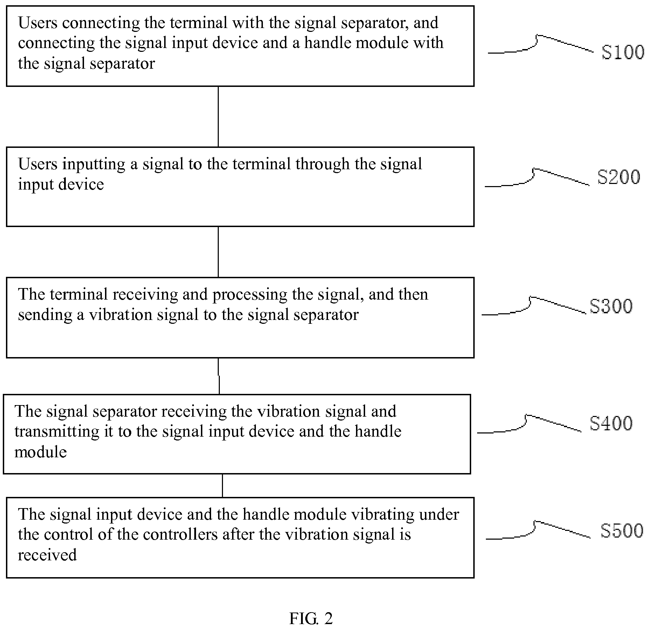

FIG. 2 is a flow diagram of one embodiment of a vibration feedback method of the present invention.

### DETAILED DESCRIPTION OF THE INVENTION

For making the purpose, technical scheme and advantages of the present invention clearer, a further detailed description of the present invention is given as follows:

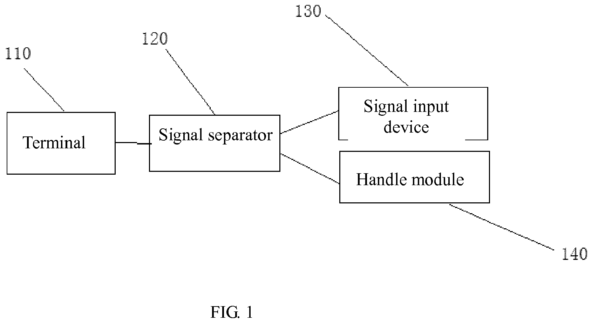

As is shown in FIG. 1, a vibration feedback system of the present invention comprises a terminal 110, wherein a signal separator 120 is connected to the terminal 110, a signal input device 130 and a handle module 140 are connected to the signal separator 120 respectively, all the above devices are electrically connected, and the handle module 140 consists of a handle module controller, or the second controller (not shown in FIGs).

Preferably, in one embodiment, the terminal 110 is generally a personal computer or a smart phone or a tablet computer; the signal separator 120 is a hub; the signal input device 130 is a mouse or a keyboard, and a vibrator, arranged in the mouse, is a vibrating motor. Based on the following embodiment, the mechanism and principle of the present invention are illustrated in detail.

As the mouse operates, the game-running computer terminal interacts with the mouse controller, or the first controller, via the signal separator 130 which can recognize the mouse and the handle module; the handle module controller of the handle module can interact with the mouse controller through the signal separator. When the user inputs a signal or an instruction through the mouse or the keyboard, the game in progress is controlled and operated by the game player and can give feedback; when a prompt message or a special scene exists, the game can feed the signal back to the signal separator. The handle module controller can interact with the mouse controller through the signal separator. At this moment, the signal separator feeds the received signal back to the mouse and the handle module, and thus the mouse is made to vibrate or the handle module is made to vibrate. The dual vibration effect can be achieved through the mouse, and thus the user can have the true feeling of being actually on the scene.

The present invention further provides a signal feedback method comprising the following steps of:
S100, connecting the terminal with the signal separator, and connecting the signal input device and the handle module with the signal separator so that a signal can be input and output conveniently through the signal separator;
S200, users inputting the signal to the terminal through the signal input device, wherein the signal is input to the terminal through the signal separator;
S300, the terminal receiving and processing the signal, and then sending a vibration signal to the signal separator;
S400, the signal separator receiving the vibration signal and transmitting it to the signal input device and the handle module; and
S500, the signal input device and the handle module vibrating under the control of the controllers after the vibration signal is received.

In one embodiment, the signal separator is a hub. The terminal is generally a personal computer or a smart phone or a tablet computer; the signal separator is a hub; the signal input device is a mouse or a keyboard, and a vibrator is arranged in the mouse.

According to the system of the present invention, under the condition that the original function of the mouse is not changed, the mouse can obtain vibration from a game in progress. Various forms of vibration of the mouse and the handle module can simulate the effects of the game scenes, and thus the pleasure during game playing is increased.

The foregoing description is only preferred embodiments of the present invention and cannot be used for limiting the protection scope of the present invention. Equivalent changes made according to claims of the present invention are still within the scope of the present invention.

## Claims

1. A vibration feedback system, **characterized by** comprising:
a signal input device connected with a terminal;
a first controller arranged in the signal input device so as to control the signal input device;
a signal separator connected with the signal input device;
a handle module connected with the signal separator;
a second controller electrically connected with the handle module so as to control the handle module; and
a vibrator arranged in the signal input device and electrically connected with the first controller, wherein after a signal is input to the terminal through the signal input device, a vibration signal sent out by the terminal is transmitted to the first controller and the second controller after passing through the signal separator, and the handle module and the vibrator are made to vibrate under the control of the first controller and the second controller.

2. The vibration feedback system according to Claim 1, **characterized in that** the signal input device is a mouse.

3. The vibration feedback system according to Claim 2, **characterized in that** the vibrator is a vibrating motor arranged in the mouse.

4. The vibration feedback system according to Claim 1, **characterized in that** the signal separator is a hub.

5. The vibration feedback system according to Claim 1, **characterized in that** the terminal includes a personal computer or a smart phone or a tablet computer.

6. A vibration feedback method, **characterized by** comprising the following steps of:
users connecting the terminal with the signal separator, and connecting the signal input device and a handle module with the signal separator;
users inputting a signal to the terminal through the signal input device;
the terminal receiving and processing the signal, and then sending a vibration signal to the signal separator;
the signal separator receiving the vibration signal and transmitting it to the signal input device and the handle module; and
the signal input device and the handle module vibrating under the control of the controllers after the vibration signal is received.

7. The vibration feedback method according to Claim 6, **characterized in that** the signal separator is a hub.

8. The vibration feedback method according to Claim 6, **characterized in that** the signal input device is a mouse.
